# EUROPÄISCHE PATENTSCHRIFT

(11) **EP 2 484 139 B1**
(45) Veröffentlichungstag und Bekanntmachung des Hinweises auf die Patenterteilung: **28.01.2015**
(21) Anmeldenummer: 10774126.6
(22) Anmeldetag: 28.09.2010
(51) Int. Cl.: H04W 16/26

(54) **BÜNDELFUNK-SYSTEM MIT BEDARFSGESTEUERTER BREITBAND-NETZERWEITERUNG**
TRUNKED RADIO SYSTEM WITH DEMAND-CONTROLLED BROADBAND NETWORK EXPANSION
SYSTÈME CELLULAIRE NUMÉRIQUE DE RADIOCOMMUNICATION À RESSOURCES PARTAGÉES AVEC EXTENSION DE RÉSEAU À LARGE BANDE SELON LES BESOINS

(30) Priorität: 28.09.2009 DE 102009043325
(43) Veröffentlichungstag der Anmeldung: 08.08.2012
(73) Patentinhaber: Hytera Mobilfunk GmbH, 31848 Bad Münder (DE)
(72) Erfinder: HAUBS, Georg, 82069 Hohenschäftlarn (DE); HUCKE, Martin, 30161 Hannover (DE); KLINGER, Bernhard, 31008 Elze (DE); KLAUSING, Matthias, 31832 Springe (DE)
(74) Vertreter: Körfer, Thomas
(86) Internationale Anmeldenummer: PCT/EP2010/005909
(87) Internationale Veröffentlichungsnummer: WO 2011/035934

(56) Entgegenhaltungen:
- EP-A1- 0 566 957
- US-A- 6 141 533
- AIACHE H ET AL: "Increasing Public Safety Communications Interoperability: The CHORIST Broadband and Wideband Rapidly Deployable Systems", COMMUNICATIONS WORKSHOPS, 2009. ICC WORKSHOPS 2009. IEEE INTERNATIONAL CONFERENCE ON, IEEE, PISCATAWAY, NJ, USA, 14. Juni 2009 (2009-06-14), Seiten 1-6, XP031515444, ISBN: 978-1-4244-3437-4
- IBRAHIM HABIB ET AL: "Wireless technologies advances for emergency and rural communications", IEEE WIRELESS COMMUNICATIONS, IEEE SERVICE CENTER, PISCATAWAY, NJ, US, Bd. 15, Nr. 3, 1. Juni 2008 (2008-06-01), Seiten 6-7, XP011228283, ISSN: 1536-1284, DOI: DOI:10.1109/MWC.2008.4547516
- DURANTINI A ET AL: "Integration of Broadband Wireless Technologies and PMR Systems for Professional Communications", NETWORKING AND SERVICES, 2008. ICNS 2008. FOURTH INTERNATIONAL CONFERENCE ON, IEEE, PISCATAWAY, NJ, USA, 16. März 2008 (2008-03-16), Seiten 84-89, XP031239280, ISBN: 978-0-7695-3094-9

## Beschreibung

Die Erfindung bezieht sich auf ein Bündelfunk-System, das aus einem Bündelfunknetz mit schmalbandigen Übertragungskanälen mit hoher Flächenabdeckung und einem Datenfunknetz mit breitbandigen Übertragungskanälen besteht. Es wird außerdem ein Verfahren zur bedarfsgeregelten Erweiterung des genannten Bündelfunk-Systems beschrieben.

Bündelfunknetze werden z.B. von Sicherheitsbehörden oder Notfallorganisationen wie z.B. der Polizei, dem Zoll, der Feuerwehr oder Notrufzentralen eingesetzt.
Funknetze basierend auf analoger Funktechnik werden immer stärker von digitalen Bündelfunknetzen, wie z.B. dem TETRA-Bündelfunknetz abgelöst. Die digitalen Bündelfunknetze, wie z. B. TETRA, arbeiten mit hoher spektraler Effizienz und Mechanismen, die auch bei schlechten Funkübertragungsbedingungen oder Überlastsituationen im Vermittlungsnetz den Aufbau eines Übertragungskanals sicherstellen. Auf der anderen Seite sind die Übertragungskanäle schmalbandig, sodass eine Datenübertragung nur sehr langsam und in begrenztem Umfang möglich ist.

Um die Datenübertragungskapazität zu steigern, gibt es Ansätze, ein Bündelfunknetz mit einem bestehenden Datennetz zu koppeln. Die Druckschrift WO 2009/089908 A1 beschreibt ein solches Verfahren. Dazu kann ein Datenfunkendgerät, das z.B. über ein GSM/UMTS- oder ein WLAN-Netz Zugang zu einem öffentlichen Internet oder einem privaten IP-Netz hat, eine Verbindung zu einer TETRA Vermittlungsstelle über einen speziellen Anwendungs-Server aufbauen. Um größere Datenmengen, z.B. Lagepläne, Fingerabdruckdaten etc., abrufen zu können, wird mindestens ein Datenfunk-Endgerät in eine Rufgruppe im Bündelfunknetz eingetragen und Kenndaten des Datenfunkendgerätes werden gespeichert. Abhängig von der Art der zu übertragenden Daten an die Rufgruppe, wird die Information entweder an ein Bündelfunkendgerät oder ein zugeordnetes Datenfunkendgerät der Rufgruppe gesendet.

Ein Nachteil dieses Verfahrens ist es, dass zur abhörsicheren Datenübertragung ein Verschlüsselungsmechanismus des Bündelfunk-Systems in das Datennetzendgerät implementiert werden muss und die Zuweisung von Verschlüsselungsparametern durch aufwendige Routinen sicher gestellt werden muss. Ein weiterer Nachteil ergibt sich aus der Verfügbarkeit von breitbandigen Datenfunknetzen, die hauptsächlich auf dicht besiedelte oder gewerblich genutzte Gebiete in Städten oder öffentliche Knotenpunkte wie Flughafen, Bahnhöfe etc. begrenzt ist. In einigen Einsatzgebieten für den Bündelfunk ist ein öffentliches Breitbanddatenfunknetz jedoch nicht verfügbar.

Das Dokument AIACHE H ET AL: "Increasing Public Safety Communications Interoperability: The CHORIST Broadband and Wideband Rapidly Deployable Systems", COMMUNICATIONS WORKSHOPS, 2009. ICC WORKSHOPS 2009. IEEE INTERNATIONAL CONFERENCE ON, IEEE, PISCATAWAY, NJ, USA, 14. Juni 2009 (2009-06-14), Seiten 1-6, ISBN: 978-1-4244-3437-4, beschreibt zukünftige öffentliche Sicherheits-Kommunikationsnetze wie z.B. ein TETRA-Bündelfunk, das beispielsweise durch eine Erweiterung der vorhandenen schmalbandigen TETRA Bündelfunk-Infrastruktur auch breitbandige Datendienste bereitstellt, und somit innerhalb des TETRA Systems z.B. eine Daten- oder Videoverbindung mit Endgeräten wie z.B. Laptops, PDA (Personal Digital Assistant) ermöglicht. Um diesen Breitbanddatendienst in einem Krisengebiet ohne Datendienstabdeckung verfügbar zu machen, werden mobile TETRA-Breitband-Basisstationen in ein Einsatzgebiet geschickt, die über eine WiMAX-Verbindung mit einem IP Übertragungsnetz und weiter mit dem schmalbandigen TETRA-Bündelfunknetz verbunden sind.

Das Dokument US 6,141,533 A beschreibt ein Bündelfunknetz, das aus einer ortsfesten Infrastruktur, Bündelfunkendgeräten und mobilen Umsetzereinrichtungen besteht. Die US 6,141,533 A beschreibt dabei insbesondere, wie ein Bündelfunkendgerät eine Kommunikationsverbindung über die mobile Umsetzereinrichtung aufbauen kann. Dabei werden Nachrichten zur Anforderung einer Verbindung (service request) von einem Bündelfunkendgerät über einen Steuerungskanal an eine feste Infrastruktureinheit geschickt und die feste Infrastruktur weist dem Bündelfunkendgerät einen Nutzkanal entweder direkt oder über eine Umsetzereinrichtung zu. Die US 6,141,533 A beschreibt insbesondere, dass eine mobile Umsetzereinrichtung genauso wie feste Infrastruktureinrichtungen einen Steuerungskanal zur Verfügung stellt, mit dem Bündelfunkendgeräte direkt eine Verbindungsanforderung oder andere Steuerungsnachrichten austauschen. Die US 6,141,533 A offenbart jedoch nicht, wie eine Erweiterung des Datenfunknetzes also die Hinzufügung einer Umsetzereinrichtung selbst angefordert werden kann und insbesondere nicht, dass dies durch das Bündelfunkendgerät möglich ist. Die US 6,141,533 A beschreibt ebenfalls nicht, wie die Position der Umsetzereinrichtungen bestimmt wird, sondern beschränkt sich lediglich darauf, eine Beschreibung zu geben, wie die Verwendung einer mobilen Umsetzereinrichtung durch ein Bündelfunkgerät in Bezug auf seine Registrierung und den Austausch von Nutz- und Steuerungsdaten abläuft.

Das Dokument IBRAHIM HABIB ET AL: "Wireless technologies advances for emergency and rural communications", IEEE WIRELESS COMMUNICATIONS, IEEE SERVICE CENTER, PISCATAWAY, NJ, US, Bd. 15, Nr. 3, 1. Juni 2008 (2008-06-01), Seiten 6-7, ISSN: 1536-1284, beschreibt die Notwendigkeit, vorhandene Bündelfunksysteme in existierende Mobilfunknetze der dritten bzw. zukünftiger vierten Generation zu integrieren, um erweiterte Kommunikationsdienste zum schnellen und effektiven Zugriff auf Datenbasen für Personal von Sicherheitsorganisationen zu ermöglichen. Dabei wird als Zugangstechnologien z.B. R-WCDMA und WiMAX verwendet, um den Zugang zu Breitbanddiensten in sämtlichen Gebieten zu ermöglichen. Dabei werden Umsetzereinrichtungen erwähnt, die zur Ad hoc-Erweiterung eines Netzes für Breitbanddienste verwendet werden können, aber kein Hinweis darauf gegeben, wie eine Netzwerkerweiterung angefordert wird und die Position der benötigten Umsetzereinrichtungen ermittelt wird.

Die Aufgabe wird durch das erfindungsgemäße System gemäß Anspruch 1 und das erfindungsgemäße Verfahren gemäß Anspruch 7 gelöst. In den Unteransprüchen sind vorteilhafte Weiterbildungen des erfindungsgemäßen Bündelfunk-Systems und des erfindungsgemäßen Verfahrens dargestellt.

Das erfindungsgemäße Bündelfunk-System besteht aus einem Bündelfunknetz mit schmalbandigen Übertragungskanälen mit hoher Flächenabdeckung und einem Datenfunknetz mit breitbandigem Übertragungskanälen, wobei das Datenfunknetz eine unvollständige Flächenabdeckung hat. Wenn im Bedarfsfall ein Bündelfunkendgerät eine Erweiterung der Flächenabdeckung des Datenfunknetzes über das Bündelfunknetz anfordert, wird zur Datenfunknetzerweiterung mindestens eine mobile Umsetzereinrichtung so positioniert, dass der Ort des anfordernden Bündelfunkendgeräts mit dem Datenfunknetz erreicht wird.

Durch ein zum Bündelfunk-System gehörendes Datenfunknetz werden vorteilhafterweise die Verschlüsselungsdaten und Mechanismen des Bündelfunknetzes auch für die Datenübertragung über das Datenfunknetz verwendet, um eine abhörsichere Übertragung von sensiblen Daten zu gewährleisten. Aufwändige Routinen zum Austausch, Abgleich und zur Verwaltung von Verschlüsselungsdaten mit einem öffentlichen Datenfunknetz entfallen.

Von Vorteil ist ebenso, dass die Flächenabdeckung durch das Datenfunknetz entsprechend den Bedürfnissen des Bündelfunkbetreibers gewählt werden kann und nicht auf das Abdeckungsgebiet, das ein fremder Betreiber vorgibt, begrenzt ist. Die Abdeckung durch das Datenfunknetz kann auf die wichtigen Einsatzgebiete der entsprechenden Organisationen optimiert und beschränkt werden. Durch eine derart gestaltete unvollständige Flächenabdeckung kann ein kostengünstiges Netz erstellt werden, das dennoch die wahrscheinlichsten Einsatzgebiete versorgt und ein günstiges Preis-Leistungsverhältnis aufweist.

Dem Betreiber eines solchen Bündelfunk-Systems sind die gesamten Netzplanungsdaten immer aktuell verfügbar, sodass eine Netzerweiterung kurzfristig planbar und über mobile Umsetzereinrichtungen realisierbar ist. Schon bei der Planung des Datenfunknetzes kann die Erweiterungsmöglichkeit in neuralgischen Gebieten berücksichtigt werden, ohne die tatsächliche Abdeckung dieses Gebietes von vornherein vorzusehen. Dies erspart Investitionskosten für Datenfunk-Basisstationen und Übertragungsleitungen sowie laufende Wartungs- und Betriebskosten.

Vorteilhafterweise wird die Erweiterungsanforderung durch ein herkömmliches Bündelfunkendgerät, das über die schmalbandigen Übertragungskanäle kommuniziert, gesendet. Durch die hohe Flächenabdeckung des Bündelfunknetzes kann also von jedem beliebigem Ort aus, auch ohne Abdeckung durch ein Datenfunknetz, die Erweiterung veranlasst werden.

Vorteilhafterweise empfängt eine Leitstelle eine Erweiterungsanforderung des anfordernden Bündelfunkendgerätes und ermittelt die räumliche Position des Bündelfunkendgeräts. Vorteilhafterweise sendet das Bündelfunkendgerät seine räumliche Position selbst an die Leitstelle und überwacht die Verfügbarkeit des Datenfunknetzes selbsttätig. Bei Verlust der Verfügbarkeit des Datenfunknetzes wird automatisch eine Erweiterungsanforderung an die Leitstelle gesendet.

Anhand der räumlichen Position des anfordernden Bündelfunkendgerätes und dem verfügbaren Netzplan des Datenfunknetzes ermittelt eine Netzplanungseinheit die zur Erweiterung benötigte Anzahl an Umsetzereinrichtungen und deren optimalen Standort. Da insbesondere der Netzplan des Datenfunknetzes in der Leitstelle immer aktuell bekannt ist, bzw. neuralgische Einsatzgebiete schon bei der Planung des vorhandenen Datenfunknetzes berücksichtigt wurden, kann die Netzerweiterung sehr schnell und bandbreitenoptimiert berechnet werden.

Es ist weiterhin von Vorteil, dass jede mobile Umsetzereinrichtung Datenfunknetzsignale zwischen einem Datenfunk-Endgerät und einer Datenfunknetz-Basisstation und/oder zwischen einer anderen mobilen Umsetzereinrichtung und einer weiteren mobilen Umsetzereinrichtung und/oder zwischen einer anderen mobilen Umsetzereinrichtung und einer Datenfunknetz-Basisstation und/oder zwischen einer anderen mobilen Umsetzereinrichtung und einem Datenfunk-Endgerät weiterleitet. Durch diese Aneinnanderreihung von Umsetzereinrichtungen kann eine Datenfunknetzzelle über große Entfernungen ausgedehnt werden, was insbesondere in ländlichen Gebieten von Vorteil ist.

Ein Ausführungsbeispiel des erfindungsgemäßen Bündelfunk-Systems und des Verfahrens zur bedarfsgeregelten Erweiterung eines Bündelfunk-Systems sind in den Zeichnungen beispielhaft dargestellt und werden anhand der nachfolgenden Beschreibung näher erläutert. Es zeigen:
- Fig. 1: ein Ausführungsbeispiel eines erfindungsgemäßen Bündelfunk-Systems in schematischer Darstellung;
- Fig. 2: ein Ablaufdiagramm eines Ausführungsbeispiels eines erfindungsgemäßen Verfahrens zur Erweiterung eines Bündelfunknetzes und
- Fig. 3: ein Ausführungsbeispiel einer erfindungsgemäßen Datenfunknetzzelle vor und nach ihrer Erweiterung in schematische Darstellung.

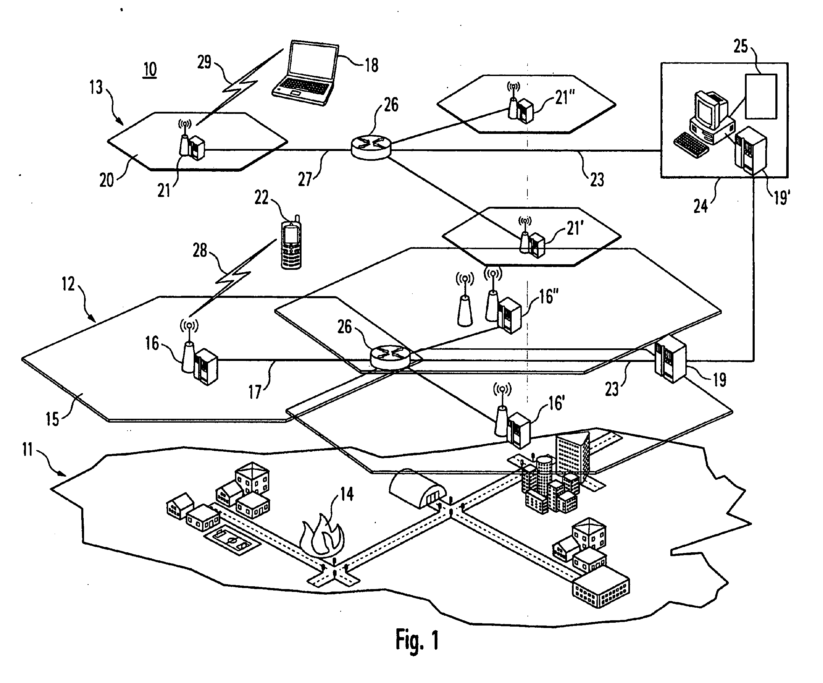

Fig. 1 zeigt ein Ausführungsbeispiel eines erfindungsgemäßen Bündelfunk-Systems. Ein Bündelfunknetz 12, z.B. ein digitales zelluläres TETRA-Netz, sorgt mit sich überlappenden Bündelfunkzellen 15 für eine lückenlose Abdeckung des Versorgungsgebiets 11. Das Bündelfunknetz 12 ermöglicht eine sehr zuverlässige Sprach- und Datenübertragung über schmalbandige Übertragungskanäle 17 mit z.B. bis zu circa 300 kbit pro Sekunde Bandbreite. Eine Sprachverbindung wird dabei vom Bündelfunkendgerät 22 über die gemäß dem TETRA-Standard arbeitende Luftschnittstelle 28 an eine Bündelfunk-Basisstation 16 übertragen. Von dort wird die Sprachverbindung entweder in herkömmlicher Weise über ein leitungsvermitteltes Transportnetz oder wie dargestellt über ein IP-Verbindungsnetz 23, das die Bündelfunk-Basisstationen 16, 16', 16" über Router 26 verbindet, an eine Bündelfunk-Vermittlungsanlage 19 übertragen. Von dort wird die Verbindung über die Bündelfunk-Vermittlungsanlage 19' zur Leitstelle oder zu einem anderen Ziel weitervermittelt.

Da in Notfall-Situationen, wie z.B. Unfällen, Bränden usw. eine Vielzahl von Informationen, wie z.B. Geländekarten, Fingerabdrücke oder auch Videoinformation benötigt werden, ist dem schmalbandigen Bündelfunknetz 12 ein breitbandiges Datenfunknetz 13 überlagert. Da Datenfunkzellen 20, die eine hohe Übertragungsbandbreite bereitstellen, nur eine Fläche von wenigen Kilometern Durchmesser aufweisen, ist die Funkabdeckung durch das Datenfunknetz unvollständig und auf neuralgische Gebiete beschränkt. Eine ähnliche Flächenabdeckung wie beim Bündelfunknetz 12 wäre durch ein Datenfunknetz 13 nur mit sehr vielen Datennetz-Basisstationen 21 möglich und daher sehr kostenaufwendig.

Eine Datenverbindung wird dabei von einem Datenfunk-Endgerät 18 z.B. über eine Luftschnittstelle 29 an eine WiMAX-Basisstation 21 übertragen und dort in das IP-Verbindungsnetz 23 eingespeist. Diese breitbandigen Übertragungskanäle 27 werden über Router 26 z.B. mit der Leitstelle 24 verbunden oder direkt zu Datenbanken der entsprechenden Behörden geführt.

Befindet sich ein Einsatzort 14, an dem größere Datenmengen benötigt werden, außerhalb der Abdeckung durch das Datenfunknetz 13, wird eine Erweiterung des Datenfunknetzes 13 über ein herkömmliches Bündelfunkendgerät 22 angefordert.

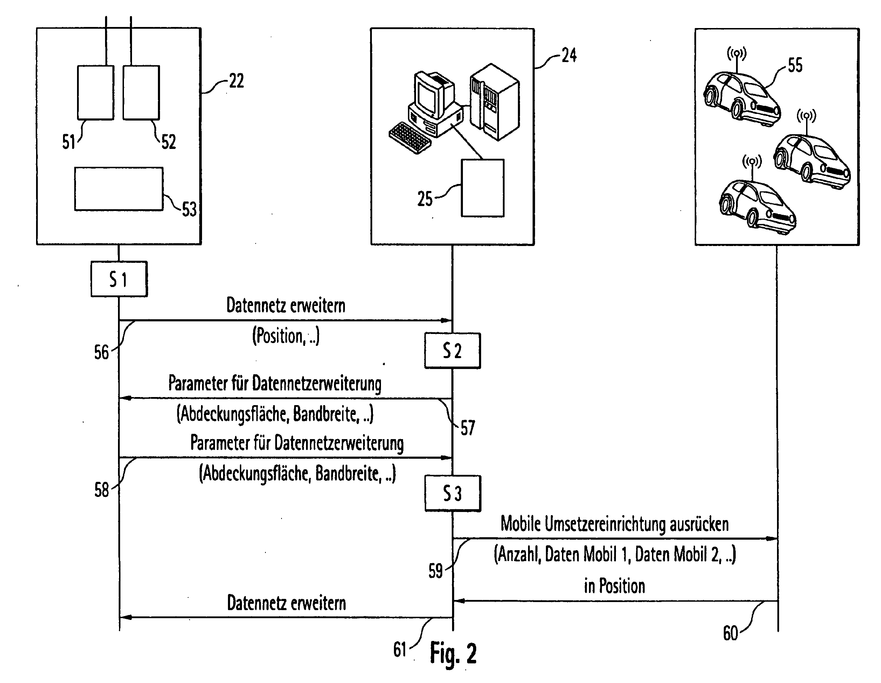

Fig. 2 beschreibt den Ablauf einer solchen Datenfunknetzerweiterung. Im Schritt S1 wird von einem Datennetz-Transceiver 52, der entweder in einem Datenfunk-Endgerät 18 enthalten ist oder wie dargestellt im Bündelfunkendgerät 22 implementiert ist, festgestellt, dass keine Datenfunknetz-Abdeckung vorhanden ist. Daraufhin wird eine Anforderung 56 zur Datennetzerweiterung über den Bündelfunk-Transceiver 51 und das flächendeckend vorhandene Bündelfunknetz 12 an die Leitstelle 24 gesendet.

Die Leitstelle 24 ermittelt im Schritt S2 zuerst die räumliche Position des anfordernden Bündelfunkendgerätes 22. Dies kann durch Ortung des anfordernden Bündelfunkendgeräts 22 erfolgen. Die räumliche Position des anfordernden Bündelfunkendgeräts 22 kann aber auch durch ein im Bündelfunkendgerät 22 enthaltenes GPS-Empfangsteil 53 ermittelt und in der Anforderungsmeldung 56 an die Leitstelle 24 mitgeteilt werden. Bei Bedarf fordert die Leitstelle 24 über eine Nachricht 57 vom anfordernden Bündelfunkendgerät weiter Parameter für die Datennetzerweiterung, wie z.B. die Größe der benötigten Abdeckungsfläche oder die gewünschte Bandbreite, an. Diese Abfrage wird über eine entsprechende Applikationsfunktion automatisch zwischen Leitstelle 24 und Bündelfunkendgerät 22 ausgetauscht.

Sind die angeforderten Parameter über eine Nachricht 58 in der Leitstelle 24 eingegangen, werden diese an eine Netzplanungseinheit 25 weitergegeben. In der Netzplanungseinheit 25 wird eine Funknetzberechnung basierend auf der Lage und Größe der benötigten Datenfunknetzabdeckung durchgeführt. Beispielsweise werden auf der Grundlage des aktuellen Netzplans des Datenfunknetzes und der Daten zur Topologie des Geländes die Anzahl und die Standorte von mobilen Umsetzereinrichtungen 55 berechnet.

Jede mobile Umsetzereinrichtung 55 erhält im Schritt S3 Daten zum genauen Standort, zu der Sendeleistung und optional zur zu sendenden Frequenz mitgeteilt. Eine mobile Umsetzereinrichtung 55 besteht aus einer Sendeanlage und integrierter Datennetz-Basisstation, die in einem Fahrzeug eingebaut sind. Bei einem Einsatz in gesundheitsgefährlichen Umgebungen wie z.B. bei Verseuchung durch Rauch oder giftigen Dämpfen kann eine mobile Umsetzereinrichtung 55 ferngesteuert in Position gebracht werden.

Melden die mobilen Umsetzereinrichtungen 55 durch eine Nachricht 60 an die Leitstelle 24, dass sie die geforderten Position eingenommen haben und mit den geforderten Parametern senden, wird dem anfordernden Bündelfunkendgerät 22 die Verfügbarkeit des erweiterten Datennetzes 13 in einer Nachricht 61 gemeldet.

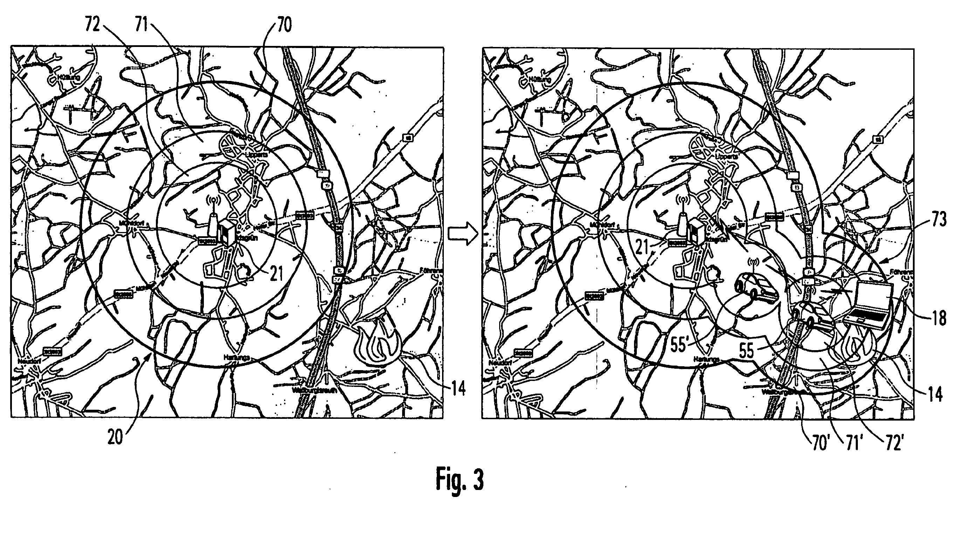

Fig. 3 zeigt, wie eine Datennetzzelle 20, die einen Einsatzort 14 nicht abdeckt, durch mobile Umsetzereinrichtungen 55 erweitert wird. Die auf der linken Karte in Fig.3 dargestellte Datenfunkzelle 20 wird von einer fest installierten Datennetz-Basisstation 21 versorgt und ermöglicht im Bereich 72 das Senden und Empfangen von Daten mit einer maximalen Bandbreite. Im daran anschließenden Bereich 71 können Datenverbindungen mit mittlerer Bandbreite übertragen werden. Im äußeren Bereich 70 ist lediglich eine niedrige Bandbreite verfügbar.

Die rechte Karte in Fig. 3 zeigt dieselbe Datennetzzelle, aber mit zwei mobilen Umsetzereinrichtungen 55, 55' erweitert. Eine erste mobile Umsetzereinrichtung 55' empfängt Signale der Datennetz-Basisstation 21 und sendet diese verstärkt auf einem anderen Kanal wieder aus. Durch Hintereinanderschalten mehrerer solcher mobiler Umsetzereinrichtungen 55, 55' kann die Datennetzzelle 20 beliebig erweitert werden. Somit bildet sich eine erweiterte Funkzelle 73, die ebenfalls in einem Gebiet 72' um die mobile Umsetzereinrichtung die maximale Bandbreite bereithält und in weiter entfernten Bereichen 71', 70' nur noch eine mittlere oder niedrige Bandbreite aufweist. Im gezeigten Beispiel wird durch zwei mobile Umsetzereinrichtungen 55 der Einsatzort 14 mit zumindest mittlerer Bandbreite abgedeckt und eine Übertragung von datenintensiven Applikationen ist gesichert.

Alle beschriebenen und/oder gezeichneten Merkmale können im Rahmen der Erfindung vorteilhaft miteinander kombiniert werden. Die Erfindung ist nicht auf die Ausführungsbeispiele beschränkt.

## Patentansprüche

1. Bündelfunk-System bestehend aus einem Bündelfunknetz (12) mit schmalbandigen Übertragungskanälen (17) mit hoher Flächenabdeckung und einem Bündelfunkendgerät (22), das über die schmalbandigen Übertragungskanäle (17) kommuniziert, und einem Datenfunknetz (13) mit breitbandigen Übertragungskanälen (27), und mit mindestens einer mobilen Umsetzereinrichtung (55) zur Erweiterung des Datenfunknetzes (13),
**dadurch gekennzeichnet,**
**dass** das Datenfunknetz (13) eine unvollständige Flächenabdeckung hat,
und **dass** das Bündelfunkendgerät (22) ausgebildet ist, um eine Erweiterung der Flächenabdeckung des Datenfunknetzes (13) über das Bündelfunknetz (12) anzufordern,
**dass** eine Netzplanungseinheit (25) vorhanden ist, die so ausgebildet ist, dass in ihr ein aktueller Netzplan des Datenfunknetzes (13) vorhanden ist und die Netzplanungseinheit (25) einen optimalen Standort einer mobilen Umsetzereinrichtung (55) basierend auf der räumlichen Position des anfordernden Bündelfunkendgeräts (22) und dem Netzplan des Datenfunknetzes (13) ermittelt, sodass zur Datenfunknetzerweiterung mindestens eine mobile Umsetzereinrichtung (55) so positionierbar ist, dass der Ort des anfordernden Bündelfunkendgeräts (22) mit dem Datenfunknetz (13) erreicht wird.

2. System nach Anspruch 1,
**dadurch gekennzeichnet,**
**dass** eine Leitstelle (24) vorhanden ist, die so ausgebildet ist, dass eine Erweiterungsanforderung (56) des anfordernden Bündelfunkendgeräts (22) empfängt und eine räumliche Position des anfordernden Bündelfunkendgeräts (22) ermittelt.

3. System nach Anspruch 2,
**dadurch gekennzeichnet,**
**dass** das Bündelfunkendgerät (22) ausgebildet ist um seine räumliche Position an die Leitstelle (24) zu senden.

4. System nach einem der Ansprüche 1 bis 3,
**dadurch gekennzeichnet,**
**dass** das Bündelfunkendgerät (22) ausgebildet ist um eine Verfügbarkeit des Datenfunknetzes (13) zu überwachen und bei Verlust der Verfügbarkeit des Datenfunknetzes (13) die Erweiterungsanforderung an die Leitstelle (24) zu senden.

5. System nach einem der Ansprüche 1 bis 4,
**dadurch gekennzeichnet,**
**dass** die Netzplanungseinheit (25) ausgebildet ist um eine Anzahl von mobilen Umsetzereinrichtungen (55) basierend auf der räumlichen Position des anfordernden Bündelfunkendgeräts (22) und dem Netzplan des Datenfunknetzes (13) zu ermitteln.

6. System nach einem der Ansprüche 1 bis 5,
**dadurch gekennzeichnet,**
**dass** jede mobile Umsetzereinrichtung (55) ausgeprägt ist um Datenfunknetzsignale zwischen einem Datenfunk-Endgerät (18) und einer Datenfunknetz-Basisstation (21) und/oder zwischen einer anderen mobilen Umsetzereinrichtung und einer weiteren mobilen Umsetzereinrichtung und/oder zwischen einer anderen mobilen Umsetzereinrichtung und einer Datenfunknetz-Basisstation (21) und/oder zwischen einer anderen mobilen Umsetzereinrichtung (55') und einem Datenfunk-Endgerät (18) weiterzuleiten.

7. Verfahren zur bedarfsgesteuerten Erweiterung eines Bündelfunk-Systems (10) bestehend aus einem Bündelfunknetz (12) mit schmalbandigen Übertragungskanälen (17) mit hoher Flächenabdeckung und einem Bündelfunkendgerät (22), das über die schmalbandigen Übertragungskanäle (17) kommuniziert, und einem Datenfunknetz (13) mit breitbandigen Übertragungskanälen (27), und mit mindestens einer mobilen Umsetzereinrichtung (55) zur Erweiterung des Datenfunknetzes,
**dadurch gekennzeichnet,**
**dass** das Datenfunknetz (13) eine unvollständige Flächenabdeckung hat und eine Netzplanungseinheit (25) ausgebildet ist, in der ein aktueller Netzplan des Datenfunknetzes (13) vorhanden ist, und
**dass**, wenn ein Bündelfunkendgerät (22) eine Erweiterung der Flächenabdeckung des Datenfunknetzes (13) über das Bündelfunknetz (12) anfordert, die Netzplanungseinheit (25) einen optimalen Standort einer mobilen Umsetzereinrichtung (55) basierend auf der räumlichen Position des anfordernden Bündelfunkendgeräts (22) und dem Netzplan des Datenfunknetzes (13) ermittelt, und zur Datenfunknetzerweiterung mindestens eine mobile Umsetzereinrichtung (55) so positioniert wird, dass der Ort des anfordernden Bündelfunkendgeräts (22) mit dem Datenfunknetz (13) erreicht wird.

8. Verfahren nach Anspruch 7,
**dadurch gekennzeichnet**,
das eine Leitstelle (24) eine Erweiterungsanforderung (56) des anfordernden Bündelfunkendgeräts (22) empfängt und eine räumliche Position des anfordernden Bündelfunkendgeräts (22) ermittelt.

9. Verfahren nach Anspruch 8,
**dadurch gekennzeichnet,**
**dass** das Bündelfunkendgerät (22) seine räumliche Position an die Leitstelle (24) sendet.

10. Verfahren nach einem der Ansprüche 7 bis 9,
**dadurch gekennzeichnet,**
**dass** das Bündelfunkendgerät (22) eine Verfügbarkeit des Datenfunknetzes (13) überwacht und bei Verlust der Verfügbarkeit des Datenfunknetzes (13) die Erweiterungsanforderung an die Leitstelle (24) sendet.

11. Verfahren einem der Ansprüche 7 bis 10,
**dadurch gekennzeichnet,**
**dass** die Netzplanungseinheit (25) eine Anzahl von mobilen Umsetzereinrichtungen basierend auf der räumlichen Position des anfordernden Bündelfunkendgeräts (22) und dem Netzplan des Datenfunknetzes (13) ermittelt.

12. Verfahren nach einem der Ansprüche 7 bis 11,
**dadurch gekennzeichnet,**
**dass** jede mobile Umsetzereinrichtung (55) Datenfunknetzsignale zwischen einem Datenfunk-Endgerät (18) und einer Datenfunknetz-Basisstation (21) und/oder zwischen einer anderen mobilen Umsetzereinrichtung und einer weiteren mobilen Umsetzereinrichtung und/oder zwischen einer anderen mobilen Umsetzereinrichtung und einer Datenfunknetz-Basisstation und/oder zwischen einer anderen mobilen Umsetzereinrichtung (55') und einem Datenfunk-Endgerät (18) weiterleitet.

## Claims

1. Trunked radio system consisting of a trunked radio network (12) with narrowband transmission channels (17) with high area coverage and a trunked radio terminal (22) which communicates via the narrowband transmission channels (17), and a data radio network (13) with broadband transmission channels (27), and with at least one mobile converter device (55) for expanding the data radio network (13),
**characterized**
**in that** the data radio network (13) has incomplete area coverage,
and **in that** the trunked radio terminal (22) is designed to request expansion of the area coverage of the data radio network (13) via the trunked radio network (12), in that there is a network planning unit (25) which is designed in such a manner that it contains a current network plan of the data radio network (13), and the network planning unit (25) determines an optimum location of a mobile converter device (55) on the basis of the spatial position of the requesting trunked radio terminal (22) and the network plan of the data radio network (13), with the result that, in order to expand the data radio network, at least one mobile converter device (55) can be positioned in such a manner that the location of the requesting trunked radio terminal (22) is reached with the data radio network (13).

2. System according to Claim 1,
**characterized**
**in that** there is a control centre (24) which is designed in such a manner that it receives an expansion request (56) from the requesting trunked radio terminal (22) and determines a spatial position of the requesting trunked radio terminal (22).

3. System according to Claim 2,
**characterized**
**in that** the trunked radio terminal (22) is designed to transmit its spatial position to the control centre (24).

4. System according to one of Claims 1 to 3,
**characterized**
**in that** the trunked radio terminal (22) is designed to monitor availability of the data radio network (13) and to transmit the expansion request to the control centre (24) if the availability of the data radio network (13) is lost.

5. System according to one of Claims 1 to 4,
**characterized**
**in that** the network planning unit (25) is designed to determine a number of mobile converter devices (55) on the basis of the spatial position of the requesting trunked radio terminal (22) and the network plan of the data radio network (13).

6. System according to one of Claims 1 to 5,
**characterized**
**in that** each mobile converter device (55) is designed to forward data radio network signals between a data radio terminal (18) and a data radio network base station (21) and/or between another mobile converter device and a further mobile converter device and/or between another mobile converter device and a data radio network base station (21) and/or between another mobile converter device (55') and a data radio terminal (18).

7. Method for the demand-controlled expansion of a trunked radio system (10) consisting of a trunked radio network (12) with narrowband transmission channels (17) with high area coverage and a trunked radio terminal (22) which communicates via the narrowband transmission channels (17), and a data radio network (13) with broadband transmission channels (27), and with at least one mobile converter device (55) for expanding the data radio network,
**characterized**
**in that** the data radio network (13) has incomplete area coverage and a network planning unit (25) is formed which contains a current network plan of the data radio network (13), and
**in that**, if a trunked radio terminal (22) requests expansion of the area coverage of the data radio network (13) via the trunked radio network (12), the network planning unit (25) determines an optimum location of a mobile converter device (55) on the basis of the spatial position of the requesting trunked radio terminal (22) and the network plan of the data radio network (13), and, in order to expand the data radio network, at least one mobile converter device (55) is positioned in such a manner that the location of the requesting trunked radio terminal (22) is reached with the data radio network (13).

8. Method according to Claim 7,
**characterized**
**in that** a control centre (24) receives an expansion request (56) from the requesting trunked radio terminal (22) and determines a spatial position of the requesting trunked radio terminal (22).

9. Method according to Claim 8,
**characterized**
**in that** the trunked radio terminal (22) transmits its spatial position to the control centre (24).

10. Method according to one of Claims 7 to 9,
**characterized**
**in that** the trunked radio terminal (22) monitors availability of the data radio network (13) and transmits the expansion request to the control centre (24) if the availability of the data radio network (13) is lost.

11. Method according to one of Claims 7 to 10,
**characterized**
**in that** the network planning unit (25) determines a number of mobile converter devices on the basis of the spatial position of the requesting trunked radio terminal (22) and the network plan of the data radio network (13).

12. Method according to one of Claims 7 to 11,
**characterized**
**in that** each mobile converter device (55) forwards data radio network signals between a data radio terminal (18) and a data radio network base station (21) and/or between another mobile converter device and a further mobile converter device and/or between another mobile converter device and a data radio network base station and/or between another mobile converter device (55') and a data radio terminal (18).

## Revendications

1. Système radio à ressources partagées constitué d'un réseau radio à ressources partagées (12) comportant des canaux de transmission à bande étroite (17) avec une couverture de surface élevée et un terminal radio à ressources partagées (22), qui communique par l'intermédiaire des canaux de transmission à bande étroite (17), et d'un réseau radio de données (13) comportant des canaux de transmission à large bande (27), et avec au moins un dispositif convertisseur mobile (55) en vue de l'extension du réseau radio de données (13),
**caractérisé en ce que**
le réseau radio de données (13) présente une couverture de surface incomplète,
et **en ce que** le terminal de radio à ressources partagées (22) est réalisé, pour demander une extension de la couverture de surface du réseau de radio de données (13) par l'intermédiaire du réseau radio de radio à ressources partagées (12),
**en ce qu'**une unité de planification de réseau (25) est prévue, qui est réalisée, de sorte qu'elle comporte un plan de réseau actuel du réseau de radio de données (13) et l'unité de planification de réseau (25) recherche un emplacement optimal d'un dispositif convertisseur mobile (55) en fonction de la position spatiale du terminal radio à ressources partagées demandeur (22) et du plan de réseau du réseau radio de données (13), de sorte qu'au moins un dispositif convertisseur mobile (55) peut être positionné en vue de l'extension du réseau radio de données, de sorte que le lieu du terminal radio à ressources partagées demandeur (22) est atteint avec le réseau radio de données (13).

2. Système selon la revendication 1, **caractérisé en ce que**
un poste de commande (24) est prévu, qui est réalisé de sorte qu'il reçoit une demande d'extension (56) du terminal radio à ressources partagées demandeur (22) et détecte une position spatiale de l'appareil terminal radio à ressources partagées demandeur (22).

3. Système selon la revendication 2, **caractérisé en ce que**
l'appareil terminal radio à ressources partagées (22) est réalisé pour envoyer sa position spatiale au poste de commande (24).

4. Système selon l'une des revendications 1 à 3, **caractérisé en ce que**
l'appareil terminal radio à ressources partagées (22) est réalisé pour surveiller une disponibilité du réseau radio de données (13) et en cas de perte de la disponibilité du réseau radio de données (13) pour envoyer la demande d'extension au poste de commande (24).

5. Système selon l'une des revendications 1 à 4, **caractérisé en ce que**
l'unité de planification de réseau (25) est réalisée pour détecter un nombre de dispositifs convertisseurs mobiles (55) en fonction de la position spatiale de l'appareil terminal radio à ressources partagées demandeur (22) et du plan de réseau du réseau radio de données (13).

6. Système selon l'une des revendications 1 à 5, **caractérisé en ce que**
chaque dispositif convertisseur mobile (55) est chargé de transférer les signaux du réseau radio de données entre un terminal radio de données (18) et une station de base de réseau radio de données (21) et/ou entre un autre dispositif convertisseur mobile et un autre dispositif convertisseur mobile et/ou un autre dispositif convertisseur mobile et une station de base de réseau radio de données (21) et/ou entre un autre dispositif convertisseur mobile (55') et un terminal radio de données (18).

7. Procédé en vue de l'extension induite par la demande d'un système radio à ressources partagées (10) constitué d'un réseau radio à ressources partagées (12) comportant des canaux de transmission à bande étroite (17) avec une couverture de surface élevée et un terminal radio à ressources partagées (22), qui communique par l'intermédiaire des canaux de transmission à bande étroite (17), et d'un réseau radio de données (13) avec des canaux de transmission à large bande (27), et avec au moins un dispositif convertisseur mobile (55) pour l'extension du réseau radio de données,
**caractérisé en ce que**
le réseau radio de données (13) présente une couverture de surface incomplète et une unité de planification de réseau (25) est réalisée, dans laquelle un plan de réseau actuel du réseau radio de données (13) est prévu, et
**en ce que**, lorsqu'un terminal radio à ressources partagées (22) demande une extension de la couverture de surface du réseau radio de données (13) par l'intermédiaire du réseau radio à ressources partagées (12), l'unité de planification de réseau (25) détecte un emplacement optimal d'un dispositif convertisseur mobile (55) en fonction de la position spatiale du terminal radio à ressources partagées demandeur (22) et du plan de réseau du réseau radio de données (13), et, en vue de l'extension du réseau radio de données, au moins un dispositif convertisseur mobile (55) est positionné de sorte que le lieu du terminal radio à ressources partagées demandeur (22) est atteint avec le réseau radio de données (13).

8. Procédé selon la revendication 7, **caractérisé en ce que**
un poste de commande (24) reçoit une demande d'extension (56) du terminal radio à ressources partagées demandeur (22) et détecte une position spatiale du terminal radio à ressources partagées demandeur (22).

9. Procédé selon la revendication 8, **caractérisé en ce que**
le terminal radio à ressources partagées (22) envoie sa position spatiale au poste de commande (24).

10. Procédé selon l'une des revendications 7 à 9, **caractérisé en ce que**
le terminal radio à ressources partagées (22) surveille une disponibilité du réseau radio de données (13) et en cas de perte de disponibilité du réseau radio de données (13) envoie la demande d'extension au poste de commande (24).

11. Procédé selon l'une des revendications 7 à 10, **caractérisé en ce que**
l'unité de planification de réseau (25) détecte un nombre de dispositifs convertisseurs mobiles en fonction de la position spatiale du terminal radio à ressources partagées demandeur (22) et du plan de réseau du réseau radio de données (13).

12. Procédé selon l'une des revendications 7 à 11, **caractérisé en ce que**
chaque dispositif convertisseur mobile (55) transmet des signaux de réseau radio de données entre un terminal radio de données (18) et une station de base de réseau radio de données (21) et/ou entre un autre dispositif convertisseur mobile et un autre dispositif convertisseur mobile et/ou entre un autre dispositif convertisseur mobile et une station de base de réseau radio de données et/ou entre un autre dispositif convertisseur mobile (55') et un terminal radio de données (18).
